# EUROPEAN PATENT SPECIFICATION

(11) **EP 3 670 588 B1**
(45) Date of publication and mention of the grant of the patent: **13.10.2021**
(21) Application number: 18215461.7
(22) Date of filing: 21.12.2018
(51) Int. Cl.: C08K 3/20, C08K 5/56, C08K 5/57, C08L 23/02, C08L 23/26, C08L 43/04

(54) **CROSSLINKING ACCELERATORES FOR SILANE-GROUP CONTAINING POLYMER COMPOSITIONS**
VERNETZUNGSBESCHLEUNIGER FÜR SILANGRUPPENHALTIGE POLYMERZUSAMMENSETZUNGEN
ACCÉLÉRATEURS DE RÉTICULATION POUR GROUPE DE SILANES CONTENANT DES COMPOSITIONS POLYMÈRES

(43) Date of publication of application: 24.06.2020
(73) Proprietor: Borealis AG, 1220 Vienna (AT)
(72) Inventor: SULTAN, Bernt-Åke, 444 86 Stenungsund (SE); NILSSON, Susanne, 444 86 Stenungsund (SE); SMEDBERG, Annika, 444 86 Stenungsund (SE)
(74) Representative: Kador & Partner PartG mbB

(56) References cited:
- CN-A- 101 173 053
- JP-A- S63 254 120
- US-A- 4 604 444
- US-A- 5 357 020

## Description

The present invention relates to a cross-linkable, grafted or non-grafted polymer composition comprising a cross-linkable copolymer containing hydrolysable silane groups. The invention further relates to a crosslinked polymer composition obtained by cross-linking the cross-linkable copolymer containing hydrolysable silane groups and an article comprising the same. The present invention also relates to the use of one or more cross-linking accelerators for accelerating the crosslinking of a cross-linkable, non-grafted copolymer containing hydrolysable silane groups.

It is known in the art to crosslink different polymers by means of specific additives or compounds. Crosslinking improves such properties of the polymer as its mechanical strength and heat resistance.

The crosslinking of polymers with hydrolysable silane groups is known in the art and is carried out by so-called moisture curing. In a first step, the silane groups are hydrolysed under the influence of water, resulting in the splitting-off of alcohol and the formation of silanol groups. In a second step, the silanol groups are crosslinked by a condensation reaction splitting off water. In both steps, a so-called condensation catalyst or silanol condensation catalyst is used as catalyst.

The curing or crosslinking of polymers with hydrolysable silane groups at ambient temperatures have become established following the introduction of compatible sulphonic acids as catalysts as described in EP 0736065 B1. However, such catalysts are deactivated in the presence of additives, such as fillers like CaCO₃, metal hydroxides, antimony trioxide, hindered amine light stabilisers or pigments.

Commonly Lewis acids, such as dibutyl tin dilaureate (DBTDL) or dioctyl tin dilaureate (DOTDL), are therefore still used as cross-linking catalysts for moisture curable compounds containing such additives. A drawback with this type of crosslinking catalysts are the slow crosslinking speed, especially at ambient conditions. Therefore curing of such material combination has commonly to be done at elevated temperatures of 60-90°C, in saunas of water bath. Increasing cost, consuming energy and increasing the logistic burden of the production process are, however, drawbacks.

US 4,549,041 discloses silane-grafted polyolefin resins blended with metallic hydrate. The metallic hydrate, such as aluminium hydroxide or magnesium hydroxide, acts as a flame-retardant.

US 2003/0134969 discloses cable compounds comprising a liquid unsaturated organosilane or carrier-supported unsaturated organosilane, a thermoplastic base polymer, and a reinforcing, extending or flame-retardant mineral filler. The silanes are grafted onto the polymer chains using a free-radical generator (FRG).

US 4,604,444 is directed to curable organopolysiloxane compositions comprising microencapsulated hardening accelerators, wherein anhydrous or hydrated hydroxides of alkali metals or of alkaline earth metals may be employed as accelerators.

US 5,357,020 is generally directed to polysiloxanes with a chromanol moiety and describes their use as antioxidant stabilizers in polyolefin compositions. The polyolefins may be homo- or copolymers of ethylene having hydrolysable silane grafted to its backbone or copolymers of ethylene with hydrolysable silane. DBTDL or dioctyl tin maleate may be used as silanol condensation catalysts.

JP S63 254120 generally relates to moisture curable silicon terminated organic polymers prepared by the reaction of a polyurethane prepolymer having a hydrogen atom with an isocyanate organosilane having a terminal isocyanate group and an isocyanate group having at least one hydrolyzable alkoxy group bonded to silicon. It also describes a cross-linkable polymer composition where dibutyltin diacetate is used as a catalyst.

CN 101 173 053 is directed to a method for preparing a room temperature self-crosslinking polyolefin by mixing a polyolefin, an initiator, a crosslinking agent, a grafting aid, a self-crosslinking accelerator, a catalyst and an antioxidant in a high-speed mixer, wherein the self-crosslinking accelerator is selected from the group consisting of decomposable hydroxides, hydrated oxides, or reactive acidic substances and metal oxides.

It is an object of the present invention to provide a cross-linkable polymer composition comprising a cross-linkable copolymer containing hydrolysable silane groups which overcomes the aforementioned problems.

It is in particular an object of the present invention to provide a cross-linkable polymer composition comprising a cross-linkable copolymer containing hydrolysable silane groups which has improved cross-linking at ambient temperatures using Lewis acids as silanol condensation catalyst.

It is further an object of the present invention to provide a cross-linkable polymer composition comprising a cross-linkable copolymer containing hydrolysable silane groups which has improved cross-linking at all temperatures and at the same time using reduced amounts of Lewis acids as silanol condensation catalyst.

The present invention is based on the surprising finding that all the above objects can be achieved by using a cross-linking accelerator, in particular a metal hydroxide, an alkaline metal hydroxide, an alkaline earth metal hydroxide or mixtures thereof, in combination with a cross-linkable copolymer containing hydrolysable silane groups.

The present invention is defined by the appended claims 1 to 13. The present invention is generally directed to a cross-linkable polymer composition comprising a cross-linkable copolymer containing hydrolysable silane groups
(A). The cross-linkable copolymer containing hydrolysable silane groups (A) can be either
(A1) a cross-linkable, non-grafted copolymer containing hydrolysable silane groups, or
(A2) a cross-linkable, grafted copolymer containing hydrolysable silane groups.

The present invention thus provides a cross-linkable polymer composition comprising
(A1) a cross-linkable, non-grafted copolymer containing hydrolysable silane groups,
(B) a condensation catalyst, and
(C) a cross-linking accelerator,
   wherein the cross-linkable, non-grafted copolymer containing hydrolysable silane groups (A1) is obtained by copolymerizing one or more olefin monomers with an unsaturated silane compound,
   wherein the condensation catalyst (B) comprises a metal carboxylate, and
   wherein the cross-linking accelerator (C) is present in an amount of 6 to 75 wt.% based on the total cross-linkable polymer composition..

The invention further provides a cross-linkable polymer composition comprising
(A2) a cross-linkable, grafted copolymer containing hydrolysable silane groups,
(B) a condensation catalyst, and
(C) a cross-linking accelerator,
wherein the condensation catalyst (B) comprises a metal carboxylate, wherein the cross-linking accelerator (C) comprises a metal hydroxide, an alkaline metal hydroxide, an alkaline earth metal hydroxide or mixtures thereof, and wherein the cross-linking accelerator (C) is present in an amount of 6 wt.% to 75 wt.% based on the total cross-linkable polymer composition.

The invention further provides a crosslinked polymer composition obtained by cross-linking the cross-linkable polymer composition according to the invention.

The invention also provides an article comprising the cross-linkable polymer composition according to the invention or comprising the crosslinked polymer composition according to the invention.

The present invention also provides the use of one or more cross-linking accelerators (C) selected from the group consisting of a metal hydroxide, an alkaline metal hydroxide, an alkaline earth metal hydroxide or mixtures thereof for accelerating the crosslinking of a cross-linkable, non-grafted copolymer containing hydrolysable silane groups (A) in the presence of a condensation catalyst (B), wherein the cross-linkable, non-grafted copolymer containing hydrolysable silane groups (A1) is obtained by copolymerizing one or more olefin monomers with an unsaturated silane compound, and wherein the cross-linking accelerator (C) is present in an amount of 6 wt.% to 75 wt.% based on the total cross-linkable polymer composition.

The present invention has a number of advantages. The invention discloses a solution in which the crosslinking speed of Lewis acids is increased by the use of cross-linking accelerators (C) according to the invention, in particular metal hydroxides, alkaline metal hydroxide, and alkaline earth metal hydroxide, making ambient curing of a cross-linkable copolymer containing hydrolysable silane groups possible.

By using cross-linking accelerators (C), in particular aluminium hydroxide (ATH) or magnesium hydroxide (MDH), in combination with a cross-linkable copolymer containing hydrolysable silane groups high crosslinking speeds can be reached with low concentrations of Lewis acids at all temperature conditions, i.e. making ambient curing of cross-linkable copolymer containing hydrolysable silane groups possible also with Lewis acids.

The present invention further surprisingly achieves that not only the crosslinking speed is improved, but at the same time also the crosslinking level, i.e. improved hot-set levels can be reached at reduced silane concentration or, alternatively, at increased concentration of non-silane containing polymers.

As mentioned above, the present invention is generally directed to a cross-linkable polymer composition comprising a cross-linkable copolymer containing hydrolysable silane groups (A). A silane compound is introduced as a cross-linkable group by either grafting the silane compound onto the prepared polyolefin or by copolymerisation of one or more olefin monomers and silane group containing monomers. Such techniques are known e.g. from US 4,413,066, US 4.297,310, US 4,351,876, US 4,397,981, US 4,446,283 and US 4,456,704.

The cross-linkable, non-grafted copolymer containing hydrolysable silane groups (A1) is preferably obtained by copolymerizing one or more olefin monomer(s) with an unsaturated silane compound, more preferably by copolymerizing one olefin monomer with an unsaturated silane compound. The copolymerisation of the one or more olefin monomer(s) with the unsaturated silane compound may be carried out under any suitable conditions resulting in the copolymerisation of the monomer(s) and the unsaturated silane compound. The unsaturated silane compound is also referred to as silane group containing monomers.

The unsaturated silane compound is preferably represented by the formula (I)

R¹SiR²_{q}Y_{3-q} (I)

wherein
R¹ is an ethylenically unsaturated hydrocarbyl, hydrocarbyloxy or (meth)acryloxy hydrocarbyl group,
R² is an aliphatic saturated hydrocarbyl group,
Y which may be the same or different, is a hydrolysable organic group and
q is 0, 1 or 2.

Special examples of the unsaturated silane compound are those wherein R¹ is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R², if present, is a methyl, ethyl, propyl, decyl or phenyl group.

A preferred unsaturated silane compound is represented by the formula (II)

CH₂=CHSi(OA)₃ (II)

wherein A is a hydrocarbyl group having 1-8 carbon atoms, preferably 1-4 carbon atoms.

The unsaturated silane compound is preferably one or more selected from the group consisting of vinyl trimethoxysilane (VTMS), vinyl bismethoxyethoxysilane, vinyl triethoxysilane, vinyl triisopropoxysilane, vinyl tri-n-butoxy silane, gamma-(meth)acryloxypropyltrimethoxysilane, gamma-(meth)acryloxypropyltriethoxysilane and vinyl triacetoxysilane. More preferably, the unsaturated silane compound is vinyl trimethoxysilane (VTMS).

The olefin monomer is one or more selected from the group consisting of ethylene, propylene or butylene, more preferably the olefin monomer is ethylene.

In preferred embodiments of the invention, the cross-linkable, non-grafted copolymer containing hydrolysable silane groups (A1) is obtained by copolymerizing ethylene with vinyl trimethoxysilane (VTMS).

The cross-linkable, non-grafted copolymer (A1) preferably contains 0.001 wt.% to 15 wt.% of hydrolysable silane groups, more preferably 0.01 wt.% to 5 wt.%, most preferably 0.1 wt.% to 2 wt.%.

Copolymer means that it is obtained by polymerizing at least two different monomers. For example a terpolymer, which is obtained by polymerizing three different monomers, thus also falls under the definition of copolymer.

Copolymerisation may also be implemented by copolymerising one olefin monomer as described above with an unsaturated silane compound as described above in the presence of one or more other comonomer(s), preferably in the presence of one other comonomer. Preferably, copolymerizing is carried out in the presence of one or more other comonomer(s), more preferably copolymerizing is carried out in the presence of one other comonomer. The other comonomer(s) is preferably an acrylate-group containing comonomer, more preferably the other comonomer is one or more selected from the group consisting of methyl acrylate, ethyl acrylate, butyl acrylate or mixture thereof, and most preferably the other comonomer is a methyl acrylate or a butyl acrylate.

The total comonomer content of the cross-linkable, non-grafted copolymer (A1) is preferably 0,5 wt.% to 70 wt.% of the copolymer, more preferably about 1 wt.% to 35 wt.%, and most preferably 5 wt.% to 30 wt.%.

The cross-linkable, non-grafted copolymer containing hydrolysable silane groups (A1) is present in an amount preferably of 94 wt.% to 22 wt.%, more preferably of 85 to 25 wt.%, more preferably of 75 wt.% to 30 wt.%, and most preferably of 65 wt.% to 35 wt.% based on the total cross-linkable polymer composition.

The cross-linkable polymer composition of the invention comprises a condensation catalyst (B), which comprises a metal carboxylate. Preferably, the metal of the metal carboxylate is selected from the group consisting of tin, zinc, iron, lead or cobalt. More preferably, the metal of the metal carboxylate is tin.

Preferably, the condensation catalyst (B) is one or more selected from the group of dibutyl tin dilaureate (DBTDL), dioctyl tin dilaureate (DOTDL), dibutyl tin diacetate, stannous acetate, stannous caprylate, zinc caprylate, lead naphthenate and cobalt naphthenate. More preferably, the condensation catalyst (B) is dibutyl tin dilaureate, dioctyl tin dilaureate or mixture thereof, most preferably the condensation catalyst (B) is dioctyl tin dilaureate (DOTDL).

The condensation catalyst (B) is present in an amount preferably of 0,001 wt.% to 3 wt.%, more preferably of 0,005 wt.% to 2 wt.%, more preferably of 0,0075 wt.% to 1 wt.%, more preferably of 0,01 wt.% to 0,5 wt.%, and most preferably of 0,02 wt.% to 0,15 wt.% based on the total cross-linkable polymer composition.

The condensation catalyst (B) is preferably added as a master batch (MB) to the cross-linkable polymer composition. The master batch preferably comprises the condensation catalyst (B) and a polymeric carrier, and optionally an antioxidant as described below. The polymeric carrier is preferably an ethylene copolymer, more preferably a copolymer of ethylene and a monomer containing alkyl acrylate groups, and most preferably an ethylene butyl acrylate copolymer.

The cross-linkable polymer composition of the invention comprises a cross-linking accelerator (C). The cross-linking accelerator (C) comprises preferably a metal hydroxide, an alkaline metal hydroxide, an alkaline earth metal hydroxide or mixtures thereof. More preferably, the cross-linking accelerator (C) comprises a metal hydroxide, and/or an alkaline earth metal hydroxide. The metal in the metal hydroxide is preferably Al. The alkaline earth metal in the alkaline earth metal hydroxide is preferably Mg.

Preferably, the cross-linking accelerator (C) comprises Al₂(OH)₃, Mg(OH)₂ or mixtures thereof, more preferably the cross-linking accelerator (C) consists of Al₂(OH)₃ and/or Mg(OH)₂.

The cross-linking accelerator (C) is present in an amount of 6 wt.% to 75 wt.%, more preferably of 8 wt.% to 70 wt.%, more preferably of 9 wt.% to 65 wt.%, and most preferably of 10 wt.% to 60 wt.% based on the total cross-linkable polymer composition.

The cross-linkable polymer composition according to the invention has an MFR₂ preferably of 0,1 to 15 g/10 min, more preferably of 0,2 to 10 g/10 min, more preferably of 0,3 to 5 g/10 min, and most preferably of 0,4 to 2,5 g/10 min determined according to ISO 1133.

The cross-linkable polymer composition preferably further comprises a filler. The filler preferably comprises, more preferably consists of, calcium carbonate. The filler is present in an amount preferably of 0,01 wt.% to 40 wt.%, more preferably of 0,1 wt.% to 38 wt.%, more preferably of 1 wt.% to 36 wt.%, more preferably of 5 wt.% to 34 wt.%, more preferably of 15 wt.% to 32 wt.%, and most preferably of 20 wt.% to 30 wt.% based on the total cross-linkable polymer composition.

The cross-linkable polymer composition preferably further comprises an additive. The additive comprises, more preferably consists of, a siloxane polymer. The siloxane polymer is preferably a poly dimethyl siloxane polymer.

The additive is present in an amount preferably of 0,01 wt.% to 6 wt.%, more preferably of 0,05 wt.% to 5 wt.%, more preferably of 0,1 wt.% to 4,5 wt.%, more preferably of 0,2 wt.% to 4 wt.% and most preferably of 0,3 wt.% to 3,5 wt.% based on the total cross-linkable polymer composition.

The cross-linkable polymer composition preferably further comprises an antioxidant. The antioxidant preferably comprises, more preferably consist of, an phosphorous-containing antioxidant and/or a phenolic antioxidant. The phenolic antioxidant is preferably pentaerythrityl-tetrakis(3-(3',5'-di-tert. butyl-4-hydroxyphenyl)-propionate, commercially available from BASF as Irganox 1010.

The antioxidant is present in an amount preferably of 0,001 wt.% to 2 wt.%, more preferably of 0,005 wt.% to 1 wt.%, more preferably of 0,007 wt.% to 0,5 wt.%, more preferably of 0,01 wt.% to 0,25 wt.% and most preferably of 0,02 wt.% to 0,1 wt.% based on the total cross-linkable polymer composition.

The present invention further provides a cross-linkable polymer composition comprising a cross-linkable, grafted copolymer containing hydrolysable silane groups (A2). As discussed above, the hydrolysable silane group can be introduced into the polymer by grafting, i.e. by chemical modification of the polymer by addition of silane group mostly in a radial reaction. This technique is well known in the art. If using a graft copolymer, this may have been produced e.g. by any of the two methods described in US 3,646,155 and US 4,117,195, respectively.

All preferred embodiments for the cross-linkable polymer composition comprising a cross-linkable, non-grafted copolymer containing hydrolysable silane groups (A1) described above are preferred embodiments of the cross-linkable polymer composition comprising a cross-linkable, grafted copolymer containing hydrolysable silane groups (A2), if applicable.

Thus, all preferred embodiments of the condensation catalyst (B) as described above for the cross-linkable polymer composition comprising a cross-linkable, non-grafted copolymer containing hydrolysable silane groups (A1) are preferred embodiments for the condensation catalyst (B) of the cross-linkable polymer composition comprising a cross-linkable, grafted copolymer containing hydrolysable silane groups (A2), if applicable.

Also, all preferred embodiments of the cross-linking accelerator (C) as described above for the cross-linkable polymer composition comprising a cross-linkable, non-grafted copolymer containing hydrolysable silane groups (A1) are preferred embodiments for the cross-linking accelerator (C) of the cross-linkable polymer composition comprising a cross-linkable, grafted copolymer containing hydrolysable silane groups (A2), if applicable.

The cross-linking accelerator (C) is present in an amount most preferably of 6 wt.% to 20 wt.% based on the total cross-linkable polymer composition.

The present invention further provides a crosslinked polymer composition obtained by cross-linking the cross-linkable polymer composition according to the invention. That is, the invention provides a crosslinked polymer composition obtained by cross-linking either the cross-linkable polymer composition comprising a cross-linkable, non-grafted copolymer containing hydrolysable silane groups (A1) according to the invention or the cross-linkable polymer composition comprising a cross-linkable, grafted copolymer containing hydrolysable silane groups (A2) according to the invention.

The cross-linking of the cross-linkable polymer composition of the invention is preferably carried out by so-called moisture curing as is known in the art. Reference is made to e.g. WO 95/17463 and WO 00/36612. In a first step, the silane groups are hydrolysed under the influence of water or steam, resulting in the splitting-off of alcohol and the formation of silanol groups. In a second step, the silanol groups are crosslinked by a condensation reaction splitting off water. In both steps, a so-called silanol condensation catalyst is used as catalyst. Cross-linking can be carried out at ambient conditions, preferably at 45% to 65 % relative humidity and a temperature of 20 °C to 25 °C, most preferably at 55% relative humidity and a temperature of 23°C. Cross-linking can also be carried out at elevated temperature, preferably at 70 °C to 90°C in water.

The invention further provides an article according to claim 12 comprising the cross-linkable polymer composition according to the invention or comprises the crosslinked polymer composition according to the invention.

Preferably, the article is a cable insulation, a cable sheath or a pipe. Preferably, the cable comprises an insulation layer, and the insulation layer comprises the cross-linkable polymer composition according to the invention or comprises the crosslinked polymer composition according to the invention.

Preferably, the cable is a low voltage power cable. However, the technology is applicable for all types of cables.

The present invention also provides the use of one or more cross-linking accelerators (C) selected from the group consisting of a metal hydroxide, an alkaline metal hydroxide, an alkaline earth metal hydroxide or mixtures thereof for accelerating the crosslinking of a cross-linkable, non-grafted copolymer containing hydrolysable silane groups (A1) described above

in the presence of a condensation catalyst, wherein the cross-linking accelerator (C) is present in an amount of 6 wt.% to 75 wt.% based on the total cross-linkable polymer composition.

All preferred embodiments for the cross-linkable polymer composition comprising a cross-linkable, non-grafted copolymer containing hydrolysable silane groups (A1) described above are preferred embodiments of the use according to the invention, if applicable.

Thus, all preferred embodiments of the condensation catalyst (B) as described above for the cross-linkable polymer composition comprising a cross-linkable, non-grafted copolymer containing hydrolysable silane groups (A1) and the cross-linkable polymer composition comprising a cross-linkable, grafted copolymer containing hydrolysable silane groups (A2) are preferred embodiments for the condensation catalyst (B) of the use of the invention, if applicable.

Also, all preferred embodiments of the cross-linking accelerator (C) as described above for the cross-linkable polymer composition comprising a cross-linkable, non-grafted copolymer containing hydrolysable silane groups (A1) and the cross-linkable polymer composition comprising a cross-linkable, grafted copolymer containing hydrolysable silane groups (A2) are preferred embodiments for the cross-linking accelerator (C) of the use of the invention, if applicable. Preferably, the cross-linkable copolymer (A) is a non-grafted copolymer as described above.

### EXAMPLES

### 1. Measurement Methods

### a) Melt flow rate

The melt flow rate (MFR₂) is determined according to ISO 1133 and is indicated in g/10 minutes.

For ethylene-based polymers it is determined with a load of 2,16 kg and at a temperature of 190°C. For propylene-based polymers it is determined with a load of 2,16 kg and at a temperature of 230°C.

### b) Hot Set

The crosslinking rate of the polymer composition was determined as Hot Set according to IEC 811-2-1-9. Hot set testing was performed on dumbbell samples, prepared from the tape, at 200 °C with 20 N/cm², and the elongation of the sample was measured after 15 min, following IEC 811-2-1-9. The tape is prepared as described below.

### 2. Materials

Polymer A: Copolymer of ethylene and vinyl trimethoxy silane (1,35 wt.%), having a MFR₂ of 1,0 g/10 min. The copolymer is produced in a front feed tubular high pressure reactor at 235 MPa and a peak temperature of 260 °C.

Polymer B: Terpolymer of ethylene, butyl acrylate (10 wt.%) and vinyltrimethoxysilane (1,5 wt.%), the terpolymer having a MFR₂ of 0,5 g/10min. The terpolymer is produced in a tubular front feed high-pressure reactor at 235 MPa and a peak temperature of 260 °C.

Polymer C: Terpolymer of ethylene, methyl acrylate (21 wt.%) and vinyltrimethoxysilane (1,0 wt.%), having a MFR₂ of 2 g/10min. The terpolymer is produced in a tubular front feed high-pressure reactor at 260 MPa and a peak temperature of 255 °C.

CaCO₃: Commercial product by Omya, EXH1SP. Particle size (dso) 1,4 µm, stearic acid coated (1%).

Al₂(OH)₃: Commercial product by Huber, Martinal OL104LE. Precipitated uncoated aluminium hydroxide with a particle size of (d₅₀) of 1,6-2,0 µm.

Mg(OH)₂: Commercial product by Huber, Magnifin H5HV. Precipitated and surface treated (polymeric coating) magnesium hydroxide with a particle size of (dso) 1,7-2,1 µm

DOTDL: dioctyltin dilaureate, commercially available from Dow Chemical Company Limited under trade name Acima DOTL 99 (CAS No. 3648-18-8), with a purity of minimum 99 wt.%.

Irganox 1010: Phenolic antioxidant, commercially available from BASF.

Si-gum: Commerical product by Wacker, Genioplast PA 4455100 VP. Ultra high-molecular weight polydimethyl siloxane polymer with a purity >98 wt.%.

### 3. Results

The compositions of the Inventive Examples (IE) and comparative examples (CE) are shown in tables 1 and 2 below. The polymers of all inventive examples are terpolymers with butyl acrylate (BA) or methyl acrylate (MA), respectively, as further comonomer as indicated. Comparative examples CE3 to CE6 are also terpolymers.

A catalyst master batch (MB) containing 2,4 wt.% DOTDL and 2 wt.% Irganox 1010 was produced on a Prism (Prism TSE 24TC) twins screw compounding with an ethylene butyl-acrylate copolymer as polymer carrier. The butyl-acrylate (BA) content was 17 wt.% and the MFR₂ of the ethylene butyl-acrylate copolymer was 4,5 g/10 minutes. The compounding was performed at a temperature setting of 160/160/160/155/155/155 °C and an output of 2 kg/hour. The master batch (MB) was added to the polymer compositions in the amounts as indicated in tables 1 and 2.

The fillers and additives were added to the respective co- or terpolymers in a Buss 46 mm co-kneater, with a temperature setting of 80/120/110/110/120/120°C.

The masterbatch (MB) was subsequently dryblended with the polymers/compounds outlined in table 1 and 2. Thereafter a 1,8 mm thick tape was extruded with a temperature profile of 135/145/155°C with 30 rpm on a Collin TeachLine E20T tape extruder with a 4.2:1, 24D Compression screw, D=20 mm.

Samples were crosslinked in 90°C water for 24h ("Final Hot Set") or hanging at ambient conditions in a constant room at 55% relative humidity and a temperature of 23°C ("Ambient").

In table 1, the time to reach 60% hot-set elongation is compared for five different silane cross-linkable formulations. Comparative examples 1 and 2 show the crosslinking speed for an unfilled ethylene vinyl trimethoxy silane copolymer at two different concentration of the Lewis acid (DOTDL). When the catalyst level is increased from 0,06 to 0,18 wt.% the time to reach 60% hot-set elongation is decreased from 95 to 55 days for a 1,8 mm thick tape stored at ambient conditions (55% relative humidity 23°C). In the following examples presented in table 1 butyl acrylate (BA) or methyl acrylate (MA) as a further comonomer is used. Filler CaCO₃ combined with these terpolymers crosslink faster than the unfilled materials. Adding aluminium hydroxide, surprisingly a significant increase in crosslinking speed is noticed, reaching 60% hot-set after 10 days at low catalyst concentration of only 0,02 wt.%. It can also be noticed that for both the Al₂(OH)₃ and Mg(OH)₂ based compounds the final hot-set level is much lower than for the hydroxide containing compounds. The final crosslinking levels have been measured after curing the 1,8 mm thick tape in a water bath at 90°C for 24 hours.

**Table 1: The influence of CaCO₃, Al₂(OH)₃ and Mg(OH)₂ on the curing characteristics**

| **Example** | **CE 1** | **CE 2** | **CE 3** | **IE 1** | **IE 2** |
|---|---|---|---|---|---|
| **Polymer type** | A | A | B | C | C |
| MFR₂, g/10min | 1 | 1 | 0,5 | 2 | 2 |
| VTMS, wt. % | 1,35 | 1,35 | 1,5 | 1,0 | 1,0 |
| Comonomer type/wt-% | - | - | BA/10 | MA/21 | MA/21 |

| **Additives/Fillers in composition** | | | | | |
|---|---|---|---|---|---|
| Al₂(OH)₃, wt-% | 0 | 0 | 0 | 60 | |
| Mg(OH)₂, wt-% | | | | | 60 |
| CaCO₃, wt-% | 0 | 0 | 25 | 0 | 0 |
| Si-gum, wt.% | 0 | 0 | 0,4 | 0 | 0 |
| **Catalyst master batch (MB), wt.%** | 7,5 | 2,5 | 5 | 1 | 1 |
| DOTDL, wt. % | 0,18 | 0,06 | 0,12 | 0,024 | 0,024 |
| Irganox 1010, wt.% | 0,15 | 0,05 | 0,1 | 0,02 | 0,02 |

| **Hot Set evaluation** | | | | | |
|---|---|---|---|---|---|
| Ambient, Time to 60% Hot-set Elongation, days | 55 | 95 | 35 | 10 | - |
| Final Hot-set Elongation, % | 35 | 35 | 30 | 6 | 8 |

In table 2 the effect of lower amounts (5-20 wt.%) of Al₂(OH)₃ on the curing speed is shown. Addition of 5 wt.% of Al₂(OH)₃ shows no influence on the curing speed, i.e. the Hot Set elongation expressed in %, while at levels of 10 wt.% or more a clear acceleration of the curing speed is surprisingly observed.

**Table 2: The effect of lower levels of Al₂(OH)₃ on the curing characteristics**

| **Example** | **CE 4** | **CE 5** | **IE 3** | **IE 4** | **IE 5** |
|---|---|---|---|---|---|
| Polymer type | B | B | B | B | B |
| MFR₂, g/10min | 0,5 | 0,5 | 0,5 | 0,5 | 0,5 |
| VTMS, wt. % | 1,5 | 1,5 | 1,5 | 1,5 | 1,5 |
| Comonomer type/wt.% | BA/10 | BA/10 | BA/10 | BA/10 | BA/10 |

| **Additives/Fillers in composition** | | | | | |
|---|---|---|---|---|---|
| Al₂(OH)₃, wt.% | 0 | 5 | 10 | 15 | 20 |
| CaCO₃, wt.% | 30 | 30 | 30 | 30 | 30 |
| Si-gum, wt.% | 3,0 | 3,0 | 3,0 | 3,0 | 3,0 |
| **Catalyst master batch (MB), wt.%** | 5 | 5 | 5 | 5 | 5 |
| DOTDL, wt. % | 0,12 | 0,12 | 0,12 | 0,12 | 0,12 |
| Irganox 1010, wt. % | 0,1 | 0,1 | 0,1 | 0,1 | 0,1 |

| **Hot Set evaluation** | | | | | |
|---|---|---|---|---|---|
| Hot-set elongation, %; | | | | | |
| 7 days | 139 | 131 | 115 | 99 | 92 |
| 14 days | 118 | 119 | 82 | 80 | 77 |
| 30 days | 102 | 106 | 84 | 79 | 69 |

## Claims

1. A cross-linkable polymer composition comprising
(A1) a cross-linkable, non-grafted copolymer containing hydrolysable silane groups,
(B) a condensation catalyst, and
(C) a cross-linking accelerator,
wherein the cross-linkable, non-grafted copolymer containing hydrolysable silane groups (A1) is obtained by copolymerizing one or more olefin monomers with an unsaturated silane compound,
wherein the condensation catalyst (B) comprises a metal carboxylate, and wherein the cross-linking accelerator (C) is present in an amount of 6 to 75 wt.% based on the total cross-linkable polymer composition.

2. The cross-linkable polymer composition according to claim 1, wherein the metal of the metal carboxylate is selected from the group consisting of tin, zinc, iron, lead or cobalt.

3. The cross-linkable polymer composition according to any one of the preceding claims, wherein the condensation catalyst (B) is present in an amount of 0,001 wt.% to 3 wt.% based on the total cross-linkable polymer composition.

4. The cross-linkable polymer composition according to any one of the preceding claims, wherein the cross-linking accelerator (C) comprises a metal hydroxide, an alkaline metal hydroxide, an alkaline earth metal hydroxide or mixtures thereof.

5. The cross-linkable polymer composition according to any one of the preceding claims, wherein the cross-linking accelerator (C) comprises Al₂(OH)₃, Mg(OH)₂ or mixtures thereof.

6. The cross-linkable polymer composition according to claims 1 to 5, wherein the unsaturated silane compound is one or more selected from the group consisting of vinyl trimethoxysilane, vinyl bismethoxyethoxysilane, vinyl triethoxysilane, vinyl triisopropoxysilane, vinyl tri-n-butoxy silane, gamma-(meth)acryloxypropyltrimethoxysilane, gamma-(meth)acryloxypropyltriethoxysilane and vinyl triacetoxysilane.

7. The cross-linkable polymer composition according to claims 1 to 6, wherein the olefin monomer is one or more selected from the group consisting of ethylene, propylene or butylene.

8. The cross-linkable polymer composition according to claims 1 to 7, wherein copolymerizing is carried out in the presence of one or more comonomers, wherein the comonomer is one or more selected from the group consisting of methyl acrylate, ethyl acrylate and butyl acrylate.

9. The cross-linkable polymer composition according to claims 1 to 8, wherein the cross-linkable polymer composition comprises a filler, wherein the filler is present in an amount of 0,01 wt.% to 40 wt.% based on the total cross-linkable polymer composition.

10. A cross-linkable polymer composition comprising
(A2) a cross-linkable, grafted copolymer containing hydrolysable silane groups,
(B) a condensation catalyst, and
(C) a cross-linking accelerator,
wherein the condensation catalyst (B) comprises a metal carboxylate, and
wherein the cross-linking accelerator (C) comprises a metal hydroxide, an alkaline metal hydroxide, an alkaline earth metal hydroxide or mixtures thereof, and
wherein the cross-linking accelerator (C) is present in an amount of 6 wt.% to 75 wt.% based on the total cross-linkable polymer composition.

11. Crosslinked polymer composition obtained by cross-linking the cross-linkable polymer composition according to any one of the preceding claims.

12. Article comprising the cross-linkable polymer composition according to claims 1 to 10 or comprising the crosslinked polymer composition according to claim 11.

13. Use of one or more cross-linking accelerators (C) selected from the group consisting of a metal hydroxide, an alkaline metal hydroxide, an alkaline earth metal hydroxide or mixtures thereof for accelerating the crosslinking of a cross-linkable, non-grafted copolymer containing hydrolysable silane groups (A1) in the presence of a condensation catalyst (B), wherein the condensation catalyst (B) comprises a metal carboxylate, wherein the cross-linkable, non-grafted copolymer containing hydrolysable silane groups (A1) is obtained by copolymerizing one or more olefin monomers with an unsaturated silane compound, and wherein the cross-linking accelerator (C) is present in an amount of 6 wt.% to 75 wt.% based on the total cross-linkable polymer composition.

## Patentansprüche

1. Vernetzbare Polymerzusammensetzung, umfassend:
(A1) ein vernetzbares, nicht gepfropftes Copolymer, das hydrolysierbare Silangruppen enthält,
(B) einen Kondensationskatalysator und
(C) einen Vernetzungsbeschleuniger,
wobei das vernetzbare, nicht gepfropfte Copolymer, das hydrolysierbare Silangruppen enthält (A1), durch Copolymerisieren eines oder mehrerer Olefinmonomere mit einer ungesättigten Silanverbindung erhalten wird,
wobei der Kondensationskatalysator (B) ein Metallcarboxylat umfasst und
wobei der Vernetzungsbeschleuniger (C) in einer Menge von 6 Gew. % bis 75 Gew.-% bezogen auf die gesamte vernetzbare Polymerzusammensetzung vorhanden ist.

2. Vernetzbare Polymerzusammensetzung nach Anspruch 1, wobei das Metall des Metallcarboxylats ausgewählt ist aus der Gruppe bestehend aus Zinn, Zink, Eisen, Blei oder Kobalt.

3. Vernetzbare Polymerzusammensetzung nach einem der vorangegangenen Ansprüche, wobei der Kondensationskatalysator (B) in einer Menge von 0,001 Gew.-% bis 3 Gew.-% bezogen auf die gesamte vernetzbare Polymerzusammensetzung vorhanden ist.

4. Vernetzbare Polymerzusammensetzung nach einem der vorangegangenen Ansprüche, wobei der Vernetzungsbeschleuniger (C) ein Metallhydroxid, ein Alkalimetallhydroxid, ein Erdalkalimetallhydroxid oder Mischungen davon umfasst.

5. Vernetzbare Polymerzusammensetzung nach einem der vorangegangenen Ansprüche, wobei der Vernetzungsbeschleuniger (C) Al₂(OH)₃, Mg(OH)₂ oder Mischungen davon umfasst.

6. Vernetzbare Polymerzusammensetzung nach einem der Ansprüche 1 bis 5, wobei die ungesättigte Silanverbindung eine oder mehrere Verbindungen ist, die aus der Gruppe ausgewählt sind, die aus Vinyltrimethoxysilan, Vinylbismethoxyethoxysilan, Vinyltriethoxysilan, Vinyltriisopropoxysilan, Vinyltri-n-butoxysilan, gamma-(Meth)acryloxypropyltrimethoxysilan, gamma-(Meth)acryloxypropyltriethoxysilan und Vinyltriacetoxysilan besteht.

7. Vernetzbare Polymerzusammensetzung nach einem der Ansprüche 1 bis 6, wobei das Olefinmonomer eines oder mehrere aus der Gruppe bestehend aus Ethylen, Propylen oder Butylen ist.

8. Vernetzbare Polymerzusammensetzung nach einem der Ansprüche 1 bis 7, wobei die Copolymerisation in Gegenwart eines oder mehrerer Comonomere durchgeführt wird, wobei das Comonomer eines oder mehrere von aus der Gruppe bestehend aus Methylacrylat, Ethylacrylat und Butylacrylat Ausgewählten ist.

9. Vernetzbare Polymerzusammensetzung nach einem der Ansprüche 1 bis 8, wobei die vernetzbare Polymerzusammensetzung einen Füllstoff umfasst, wobei der Füllstoff in einer Menge von 0,01 Gew.-% bis 40 Gew.-% bezogen auf die gesamte vernetzbare Polymerzusammensetzung vorhanden ist.

10. Vernetzbare Polymerzusammensetzung, umfassend:
(A2) ein vernetzbares, gepfropftes Copolymer, das hydrolysierbare Silangruppen enthält,
(B) einen Kondensationskatalysator und
(C) einen Vernetzungsbeschleuniger,
wobei der Kondensationskatalysator (B) ein Metallcarboxylat umfasst,
wobei der Vernetzungsbeschleuniger (C) ein Metallhydroxid, ein Alkalimetallhydroxid, ein Erdalkalimetallhydroxid oder Mischungen davon umfasst, und
wobei der Vernetzungsbeschleuniger (C) in einer Menge von 6 Gew. % bis 75 Gew.-% bezogen auf die gesamte vernetzbare Polymerzusammensetzung vorhanden ist.

11. Vernetzte Polymerzusammensetzung, erhalten durch Vernetzen der vernetzbaren Polymerzusammensetzung nach einem der vorangegangenen Ansprüche.

12. Gegenstand, umfassend die vernetzbare Polymerzusammensetzung nach einem der Ansprüche 1 bis 10 oder umfassend die vernetzte Polymerzusammensetzung nach Anspruch 11.

13. Verwendung eines oder mehrerer Vernetzungsbeschleuniger (C), ausgewählt aus der Gruppe bestehend aus einem Metallhydroxid, einem Alkalimetallhydroxid, einem Erdalkalimetallhydroxid oder Mischungen davon, zur Beschleunigung der Vernetzung eines vernetzbaren, nicht gepfropften Copolymers, das hydrolysierbare Silangruppen (A1) enthält, in Gegenwart eines Kondensationskatalysators (B), wobei der Kondensationskatalysator (B) ein Metallcarboxylat umfasst, wobei das vernetzbare, nicht gepfropfte Copolymer, das hydrolysierbare Silangruppen (A1) enthält, durch Copolymerisieren eines oder mehrerer Olefinmonomere mit einer ungesättigten Silanverbindung erhalten wird, und wobei der Vernetzungsbeschleuniger (C) in einer Menge von 6 Gew. % bis 75 Gew.-% bezogen auf die gesamte vernetzbare Polymerzusammensetzung vorhanden ist.

## Revendications

1. Composition de polymère réticulable comprenant
(A1) un copolymère réticulable non greffé contenant des groupes silane hydrolysables,
(B) un catalyseur de condensation, et
(C) un accélérateur de réticulation,
dans laquelle le copolymère réticulable non greffé contenant des groupes silane hydrolysables (A1) est obtenu par copolymérisation d'un ou de plusieurs monomères oléfiniques avec un composé silane insaturé,
dans laquelle le catalyseur de condensation (B) comprend un carboxylate de métal, et dans laquelle l'accélérateur de réticulation (C) est présent en une quantité de 6 à 75 % en poids rapporté à la composition de polymère réticulable totale.

2. Composition de polymère réticulable selon la revendication 1, dans laquelle le métal du carboxylate de métal est sélectionné dans le groupe constitué par l'étain, le zinc, le fer, le plomb ou le cobalt.

3. Composition de polymère réticulable selon l'une quelconque des revendications précédentes, dans laquelle le catalyseur de condensation (B) est présent en une quantité de 0,001 % en poids à 3 % en poids rapporté à la composition de polymère réticulable totale.

4. Composition de polymère réticulable selon l'une quelconque des revendications précédentes, dans laquelle l'accélérateur de réticulation (C) comprend un hydroxyde de métal, un hydroxyde de métal alcalin, un hydroxyde de métal alcalino-terreux ou des mélanges de ceux-ci.

5. Composition de polymère réticulable selon l'une quelconque des revendications précédentes, dans laquelle l'accélérateur de réticulation (C) comprend Al₂(OH)₃, Mg(OH)₂ ou des mélanges de ceux-ci.

6. Composition de polymère réticulable selon les revendications 1 à 5, dans laquelle le composé silane insaturé est un ou plusieurs sélectionnés dans le groupe constitué par le vinyltriméthoxysilane, le vinylbisméthoxyéthoxysilane, le vinyltriéthoxysilane, le vinyltriisopropoxysilane, le vinyltri-n-butoxysilane, le gamma-(méth)acryloxypropyltriméthoxysilane, le gamma-(méth)acryloxypropyltriéthoxysilane et le vinyltriacétoxysilane.

7. Composition de polymère réticulable selon les revendications 1 à 6, dans laquelle le monomère oléfinique est un ou plusieurs sélectionnés dans le groupe constitué par l'éthylène, le propylène ou le butylène.

8. Composition de polymère réticulable selon les revendications 1 à 7, dans laquelle la copolymérisation est réalisée en présence d'un ou de plusieurs comonomères, dans laquelle le comonomère est un ou plusieurs sélectionnés dans le groupe constitué par l'acrylate de méthyle, l'acrylate d'éthyle et l'acrylate de butyle.

9. Composition de polymère réticulable selon les revendications 1 à 8, dans laquelle la composition de polymère réticulable comprend une charge, dans laquelle la charge est présente en une quantité de 0,01 % en poids à 40 % en poids rapporté à la composition de polymère réticulable totale.

10. Composition de polymère réticulable comprenant
(A2) un copolymère réticulable greffé contenant des groupes silane hydrolysables,
(B) un catalyseur de condensation, et
(C) un accélérateur de réticulation,
dans laquelle le catalyseur de condensation (B) comprend un carboxylate de métal, et dans laquelle l'accélérateur de réticulation (C) comprend un hydroxyde de métal, un hydroxyde de métal alcalin, un hydroxyde de métal alcalino-terreux ou des mélanges de ceux-ci, et
dans laquelle l'accélérateur de réticulation (C) est présent en une quantité de 6 % en poids à 75 % en poids rapporté à la composition de polymère réticulable totale.

11. Composition de polymère réticulée obtenue par réticulation de la composition de polymère réticulable selon l'une quelconque des revendications précédentes.

12. Article comprenant la composition de polymère réticulable selon les revendications 1 à 10 ou comprenant la composition de polymère réticulée selon la revendication 11.

13. Utilisation d'un ou de plusieurs accélérateurs de réticulation (C) sélectionnés dans le groupe constitué par un hydroxyde de métal, un hydroxyde de métal alcalin, un hydroxyde de métal alcalino-terreux ou des mélanges de ceux-ci pour accélérer la réticulation d'un copolymère réticulable non greffé contenant des groupes silane hydrolysables (A1) en présence d'un catalyseur de condensation (B), dans laquelle le catalyseur de condensation (B) comprend un carboxylate de métal, dans laquelle le copolymère réticulable non greffé contenant des groupes silane hydrolysables (A1) est obtenu par copolymérisation d'un ou de plusieurs monomères oléfiniques avec un composé silane insaturé, et dans laquelle l'accélérateur de réticulation (C) est présent en une quantité de 6 % en poids à 75 % en poids rapporté à la composition de polymère réticulable totale.
